# EUROPEAN PATENT APPLICATION

(11) **EP 2 740 907 A1**
(43) Date of publication of application: **11.06.2014**
(21) Application number: 13195510.6
(22) Date of filing: 03.12.2013
(51) Int. Cl.: F01K 13/02, F01K 23/10

(54) **Load ramp and start-up system for combined cycle power plant and method of operation**

(30) Priority: 05.12.2012 US 201213705797
(71) Applicant: General Electric Company, Schenectady, New York 12345 (US)
(72) Inventor: Ekanayake, Sanji, Atlanta, GA Georgia 30339 (US); Mestroni, Julio Enrique, Atlanta, GA Georgia 30339 (US); Scipio, Alston Liford, Atlanta, GA Georgia 30339 (US); Smith, Gordon Raymond, Schenectady, NY New York 12345 (US)
(74) Representative: Cleary, Fidelma

(57) **Abstract**

The disclosure includes a load ramp system for a heat recovery steam (126) generator (HRSG) (104) of a combined cycle power plant (100) and a method of increasing the rate of the load ramp process of a gas turbine system of the combined cycle power plant. In one embodiment, the load ramp system for the HRSG of the combined cycle power plant includes a conduit in fluid communication with a supercharger (128) positioned upstream of a compressor (108) of a gas turbine system (102) in the combined cycle power plant. The conduit of the load ramp system is configured to direct a portion of supercharged air for use in cooling the HRSG during a load ramp process of the gas turbine system in the combined cycle power plant.

## Description

### BACKGROUND

### 1. Technical Field

The disclosure is related generally to a combined cycle power plant. More particularly, the disclosure is related to a load ramp and start-up system for a gas turbine and heat recovery steam generator (HRSG) of a combined cycle power plant and a method of increasing the load ramp rate and start-up rate processes of a combined cycle power plant.

### 2. Related Art

Conventional combined cycle power plants are used to generate power using a variety of power generation components. In its most basic form, conventional combined cycle power plants include a gas turbine, a heat recovery steam generator (HRSG) and a steam turbine. During operation of the combined cycle power plant, the gas turbine produces an exhaust gas while generating a portion of the power output for the combined cycle power plant. The HRSG, coupled to the gas turbine, receives the high-temperature exhaust gas from the gas turbine, and utilizes the energy in the high-temperature exhaust gas to convert water to steam. The steam generated by the HRSG is then utilized and expanded in the steam turbine for generating additional power for the combined cycle power plant.

In the conventional combined cycle power plant, the gas turbine is typically started first because the gas turbine may become fully operational in a very short amount of time. However, because the gas turbine is capable of starting so quickly, the HRSG of the combined cycle power plant is subject to a tremendous amount of thermal stress. More particularly, the gas turbine may produce high-temperature exhaust gas within seconds of being started. This high-temperature exhaust gas is then supplied to the HRSG, which typically has not been adequately warmed. As a result, the "cold" HRSG is subject to the high-temperatures of the exhaust gas generated by the gas turbine.

This thermal stress created by the exhaust gas may cause damage to the components of the HRSG. Although it may be beneficial to start the gas turbine for near-instantaneous power generation in the combine power cycle system, the negative effects caused by the thermal stress to the HRSG may outweigh any benefit. Particularly, repairing, or replacing HRSGs can be very expensive, time consuming and require the combined cycle power plant to be powered down.

### BRIEF DESCRIPTION

A load ramp system for a heat recovery steam generator (HRSG) of a combined cycle power plant and a method of increasing the rate of a load ramp and a start-up process of a gas turbine system of the combined cycle power plant is disclosed. In one embodiment, the load ramp system includes: a conduit in fluid communication with a supercharger positioned upstream of a compressor of a gas turbine system in the combined cycle power plant, the conduit configured to direct a portion of supercharged air for use in cooling the HRSG in fluid communication with the gas turbine system during load ramp of the gas turbine system in the combined cycle power plant.

A first aspect of the invention includes a load ramp system for a heat recovery steam generator (HRSG) of a combined cycle power plant. The load ramp system includes: a conduit in fluid communication with a supercharger positioned upstream of a compressor of a gas turbine system in the combined cycle power plant, the conduit configured to direct a portion of supercharged air for use in cooling the HRSG in fluid communication with the gas turbine system during load ramp of the gas turbine system in the combined cycle power plant.

A second aspect of the invention includes a load ramp system for a heat recovery steam generator (HRSG) of a combined cycle power plant. The load ramp system includes: a conduit in fluid communication with a supercharger positioned upstream of a compressor of a gas turbine system in the combined cycle power plant, the conduit configured to direct a portion of supercharged air for use in cooling the HRSG in fluid communication with the gas turbine system during load ramp of the gas turbine system in the combined cycle power plant; and an airflow monitoring system operably connected to the supercharger, the airflow monitoring system including: an airflow sensor positioned within the conduit, the airflow sensor for sensing a flow rate of the directed portion of the supercharged air within the conduit; and a diagnostic system operably connected to the airflow sensor, the supercharger and an automated valve positioned within the conduit, the diagnostic system configured to: modify a position of the automated valve in response to the flow rate of the directed portion of the supercharged air differing from a predetermined flow rate.

A third aspect of the invention includes a method for increasing the load ramp rate of a gas turbine system of a combined cycle power plant. The method includes: providing a conduit in fluid communication with a supercharger positioned upstream of a compressor of the gas turbine system in the combined cycle power plant, the conduit configured to direct a portion of supercharged air for use in cooling an HRSG in fluid communication with the gas turbine system during load ramp of the gas turbine system in the combined cycle power plant; and modifying a position of an automated valve positioned within the conduit in response to a flow rate of the directed portion of the supercharged air differing from a predetermined flow rate.

### BRIEF DESCRIPTION OF THE DRAWINGS

These and other features of this invention will be more readily understood from the following detailed description of the various aspects of the invention taken in conjunction with the accompanying drawings that depict various embodiments of the invention, in which:
FIG. 1 shows a schematic depiction of a combined cycle power plant including a load ramp system for a heat recovery steam generator (HRSG), according to embodiments of the invention.
FIG. 2 shows a schematic depiction of a combined cycle power plant including a load ramp system for an HRSG, according to an alternative embodiment of the invention.
FIG. 3 shows a schematic depiction of a combined cycle power plant including a load ramp system for an HRSG, according to a further alternative embodiment of the invention.
FIG. 4 shows a schematic depiction of a combined cycle power plant including a load ramp system for an HRSG, according to an additional embodiment of the invention.
FIG. 5 shows a schematic depiction of an airflow monitoring system according to embodiments of the invention.
FIG. 6 shows a flow diagram illustrating processes of increasing the load ramp rate of a gas turbine system, according to embodiments of the invention.

It is noted that the drawings of the invention are not necessarily to scale. The drawings are intended to depict only typical aspects of the invention, and therefore should not be considered as limiting the scope of the invention. In the drawings, like numbering represents like elements between the drawings.

### DETAILED DESCRIPTION

As described herein, aspects of the invention relate to a combined cycle power plant. Specifically, aspects of the invention relate to the load ramp and start-up system for a heat recovery steam generator (HRSG) of a combined cycle power plant and a method of increasing the load ramp rate and start-up processes of a gas turbine system of the combined cycle power plant.

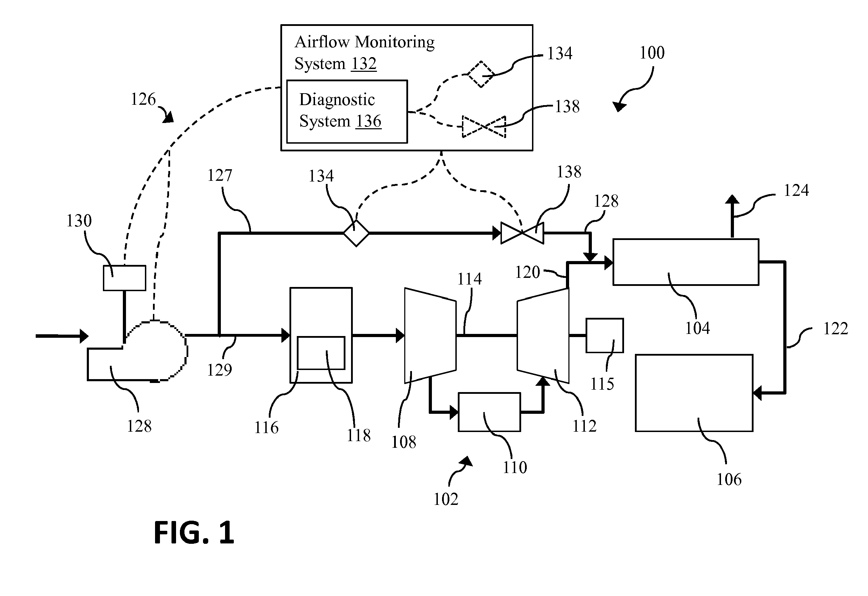

Turning to FIGS. 1-4, a combined cycle power plant including a start-up system is shown according to various embodiments of the invention. A brief description of the combined cycle power plant 100 and load ramp process of combined cycle power plant 100 shown in FIG. 1 is provided for clarity. As shown in FIGS. 1-4, combined cycle power plant 100 for generating power may include a gas turbine system 102, a heat recovery steam generator (HRSG) 104 in fluid communication with gas turbine system 102, and a steam turbine system 106 in fluid communication with HRSG 104. Gas turbine system 102 may include a compressor 108, a combustor 110 fluidly coupled to compressor 108, and a gas turbine 112 fluidly coupled to combustor 110 for receiving combustion products from combustor 110. Gas turbine 112 may also be coupled to compressor 108 via shaft 114. Shaft 114 of gas turbine system 102 may also include generator 115 coupled to gas turbine 112 for creating electricity during operation of combined cycle power plant 100. Gas turbine system 102 and its respective components (compressor 108, combustor 110, gas turbine 112, etc.) may be any conventional gas turbine system and corresponding components. As such, basic functionality of the majority of the components has been omitted for clarity.

In embodiments, as shown in FIGS. 1-4, gas turbine system 102 of combined cycle power plant 100 may also include an air inlet housing 116 positioned in series, upstream of compressor 108. More specifically, air inlet housing 116 may be coupled to compressor 108 of gas turbine system 102 for providing inlet air to compressor 108 during operation of gas turbine system 102. Air inlet housing 116 may include an inlet air cooling system 118 positioned directly within air inlet housing 116. More specifically, inlet air cooling system 118 may be positioned within a plurality of air ducts which may form air inlet housing 116. Inlet air cooling system 118 may be any conventional air cooling system (e.g., wet compression system, inlet fogging system, refrigeration/chilling system, etc.) configured to cool inlet air within air inlet housing 116 before the inlet air reaches compressor 108 of gas turbine system 102. More specifically, inlet air cooling system 118 may reduce the temperature of the inlet air before it reaches compressor 108 in order to increase the air mass flow of the inlet air. By increasing the air mass flow of the inlet air, compressor 108 of gas turbine system 102 may compress the inlet air using a reduced work load per unit of inlet air mass flow. The reduced work load of compressor 108 may ultimately allow gas turbine system 102 to generate higher power output.

As shown in FIGS. 1-4, combined cycle power plant 100 may also include an exhaust duct 120 positioned in series, downstream of gas turbine 112. More specifically, exhaust duct 120 may be coupled to gas turbine 112 for receiving exhaust gas generated by gas turbine 112 during operation of gas turbine system 102 and/or combined cycle power plant 100. In embodiments shown in FIGS. 1-4, HRSG 104 may be coupled to exhaust duct 120 and may receive the exhaust gas generated by gas turbine 112 during operation of gas turbine system 102. More specifically, HRSG 104 may receive the high-temperature exhaust gas generated by gas turbine 112 and may utilize the high-temperature exhaust gas to convert water to steam used for power augmentation of steam turbine system 106. HRSG 104 may supply the generated steam to steam turbine system 106 via conduit 122. Additionally, HRSG 104 may be configured to filter the exhaust gas generated by gas turbine 112 of gas turbine system 102 before exhausting the filtered gas out of combined cycle power plant 100. More specifically, HRSG 104 may filter out any mitigating toxic emissions and/or pollutants (e.g., CO, NOx, etc.) created by the combustion of the combustion product in gas turbine 112, which results in the high temperature exhaust gas, and may safely exhaust the filtered gas into the atmosphere via exhaust stack 124 of HRSG 104.

During the load ramp process of combined cycle power plant 100, gas turbine system 102 may drastically increase is power output in a very short period of time (e.g., under 10 seconds). That is, when combined cycle power plant 100 undergoes a load ramp process, combustor 110 of gas turbine system 102 ignites a flame and compressed air from compressor 108 is mixed with additional fuel to form an increased amount of combustion product, which is ignited by the flame of combustor 110 and increases the drive of gas turbine 112. After passing through gas turbine 112, the additional combustion product, now exhaust gas, passes through exhaust duct 120 and into HRSG 104 to aid in the conversion of water to steam for steam turbine 106. As a result of gas turbine system 102 generating exhaust gas having a high temperature in a short period of time, HRSG 104 may be subject to excessive thermal stresses during the load ramp process of combined cycle power plant 100. More specifically, HRSG 104 may undergo a change in temperature from 250 degrees Celsius to 650 degrees Celsius in less than 10 seconds, which may cause damage to HRSG 104 and may shorten the operational life of HRSG 104.

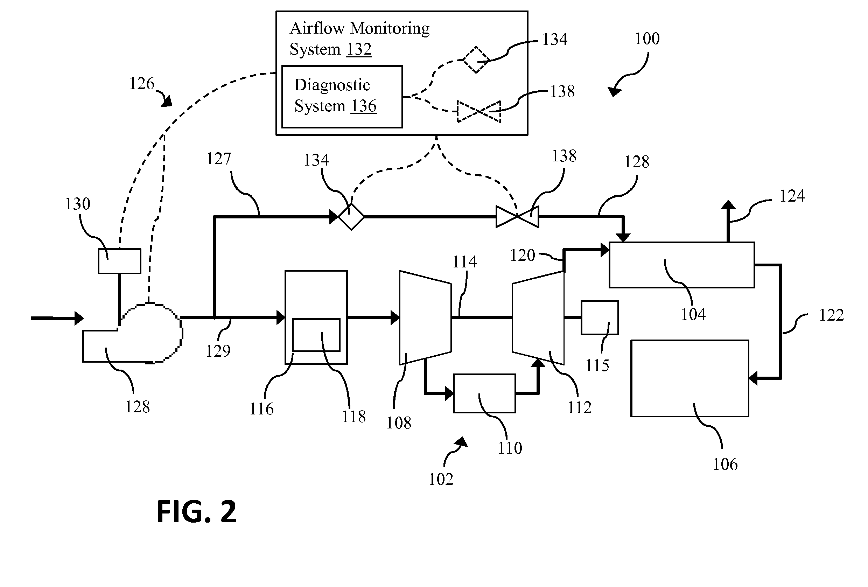

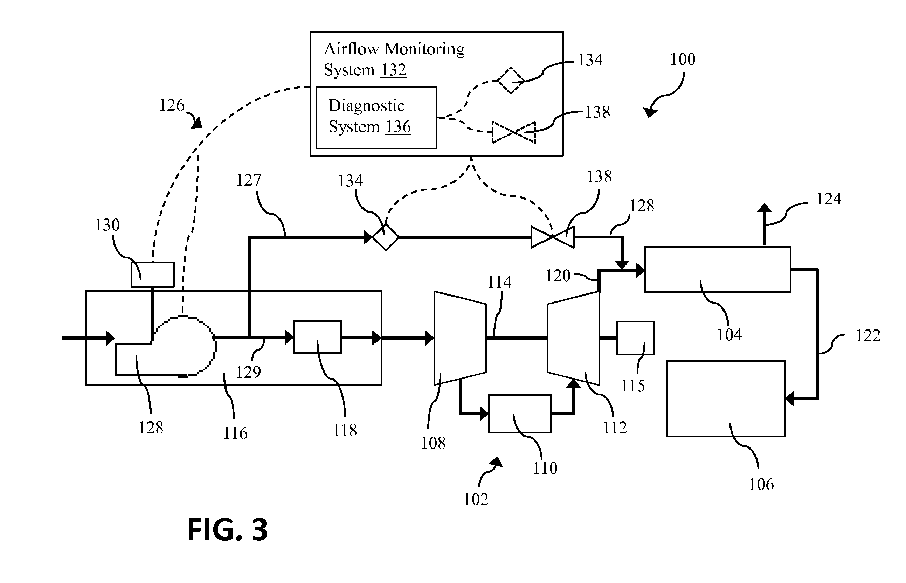

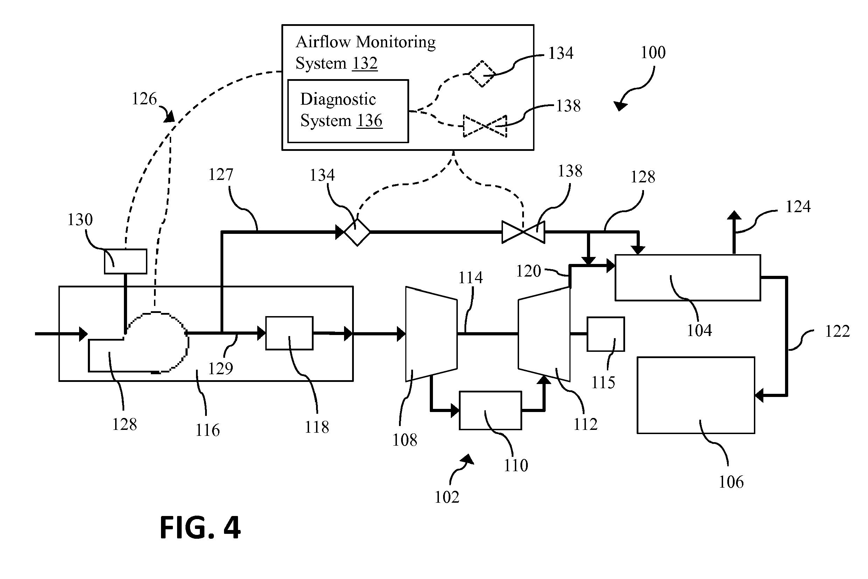

Also shown in FIGS. 1-4, combined cycle power plant 100 may include a load ramp system 126 for HRSG 104 of combined cycle power plant 100. Load ramp system 126 may include a conduit 127 in fluid communication with a supercharger 128 positioned upstream of compressor 108 of gas turbine system 102 in combined cycle power plant 100. Conduit 127 may be configured to direct a portion of supercharged air for use in cooling HRSG 104 that may be in fluid communication with gas turbine system 102. More specifically, conduit 127 may be configured to direct a portion of supercharged air for use in cooling HRSG 104 during the load ramp process of gas turbine system 102 in combined cycle power plant 100. In embodiments, as shown in FIGS. 1 and 3, conduit 127 may be configured to direct a portion of supercharged air to exhaust duct 120 of gas turbine system 102. In an alternative embodiment, as shown in FIG. 2, conduit 127 may be configured to direct a portion of supercharged air directly to HRSG 104. Alternatively, as shown in FIG. 4, conduit 127 may direct the portion of supercharged air to both exhaust duct 120 and HRSG 104 during a load ramp process of gas turbine system 102. As shown in FIGS. 1-4, conduit 127 may intersect an air inlet conduit 129 positioned between supercharger 128 and air inlet housing 116. More specifically, conduit 127 may be in fluid communication with air inlet conduit 129 such that a portion of the supercharged air may flow through conduit 127 and may be directed to exhaust duct 120, and/or HRSG 104 for cooling HRSG 104 during the load ramp of gas turbine system 102. The remaining portion of the supercharged air may flow through air inlet conduit 129, and may be provided to air inlet housing 116 and subsequently, compressor 108 of gas turbine system 102. Conduit 127 may be formed by any conventional component (e.g., air duct, air pipe, etc.) for providing a portion of the supercharged air generated by supercharger 128.

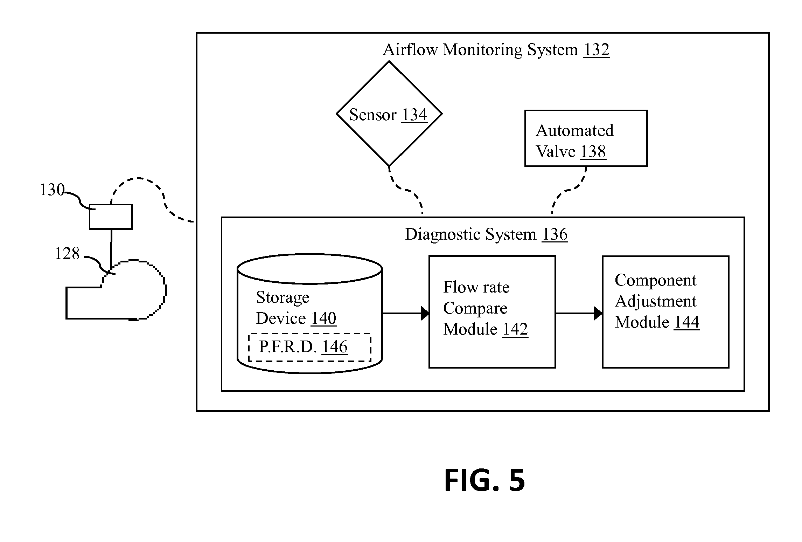

As shown in FIGS. 1-4, supercharger 128 may be in fluid communication with compressor 108 of gas turbine system 102. More specifically, as shown in FIGS. 1-4, supercharger 128 may be positioned in series, upstream of inlet air cooling system 118 of gas turbine system 102, for providing supercharged air (e.g., initially compressed air) to compressor 108 of gas turbine system 102. In an embodiment, as shown in FIGS. 2 and 3, supercharger 128 may also be positioned in series upstream of air inlet housing 116. In an alternative embodiment, as shown in FIGS. 4 and 5, supercharger 128 may be positioned within inlet housing 116, and may be positioned in series upstream of inlet air cooling system 118 of gas turbine system 102. As shown in FIGS. 1-4, supercharger 128 may be connected to an auxiliary motor 130. Auxiliary motor 130 may provide supercharger 128 with operational power to generate supercharged air during the load ramp process of gas turbine system 102, as discussed herein. In an alternative embodiment, not shown, supercharger 128 may be coupled to shaft 114 of gas turbine system 102, and may simultaneously become operational with gas turbine system 102.

A remaining portion of the supercharged air generated by supercharger 128 may be provided to compressor 108 of gas turbine system 102 for increasing an inlet air flow rate of compressor 108. More specifically, supercharger 128 may be configured to initially compress inlet air before it reaches compressor 108 of gas turbine system 102. By initially compressing the inlet air, supercharger 128 may increase the inlet air flow rate, which in part may increase the load ramp capabilities of gas turbine system 102 and/or combined cycle power plant 100 by providing compressor 108 with an increased amount of inlet air that may be already partially compressed. Moreover, by positioning supercharger 128 in series upstream of inlet air cooling system 118, a portion of supercharged air supplied to gas turbine system 102 may be cooled, and may result in an increase in the air mass flow rate prior to the supercharged air entering compressor 108. As discussed above, the increased mass air flow rate may result in increased load ramp time and increased power generation by gas turbine system 102 of combined cycle power plant 100. In addition, utilizing supercharger 128 may reduce the fuel discharged in combustor 110 during load ramp, which may minimize toxic emissions and/or pollutants (e.g., CO, NOx, etc.) during the load ramp process of combine power cycle 100.

As shown in FIGS. 1-4, load ramp system 126 of combined cycle power plant 100 may also include an airflow monitoring system 132 operably connected to supercharger 128 (e.g., via wireless, hardwire, or other conventional means). More specifically, as shown in FIGS. 1-4, airflow monitoring system 132 may be operably connected to supercharger 128 and auxiliary motor 130 for controlling supercharger 128 during the load ramp process of gas turbine system 102, as discussed herein. Airflow monitoring system 132 may include an airflow sensor 134 positioned within conduit 127 for sensing a flow rate of the directed portion of the supercharged air within conduit 127. That is, airflow sensor 134 may sense a flow rate of the portion of the supercharged air directed through conduit 127 for use in cooling HRSG 104 during load ramp of gas turbine system 102. Airflow sensor 134 may be coupled to, for example, an inner surface of conduit 127. Airflow sensor 134 may be any conventional device configured to measure the air flow rate of supercharged air through conduit 127, including, but not limited to: an air flow meter, a mass flow sensor, or an anemometer. In an alternative embodiment, not shown, airflow monitoring system 132 may include a plurality of sensors 134 positioned within conduit 127.

Airflow monitoring system 132 of combined cycle power plant 100 may also include a diagnostic system 136 operably connected to airflow sensor 134, supercharger 128 and an automated valve 138 positioned within conduit 127. As discussed herein, diagnostic system 136 may be configured to modify a position of automated valve 138 during the load ramp process of gas turbine system 102. As shown in FIGS. 1-4, automated valve 138 may be positioned within conduit 127 downstream of airflow sensor 134 for regulating the portion of directed supercharged air for use in cooling HRSG 104 during the load ramp process of gas turbine system 102, as described herein. Automated valve 138 may be any conventional valve that may be actuated by diagnostic system 136 during the load ramp process of gas turbine system 102, including, but not limited to: a hydraulic valve, a pneumatic valve, a solenoid valve, or a motorized valve.

Turning to FIG. 5, a schematic depiction of airflow monitoring system 132 is shown according to embodiments of the invention. As shown in FIG. 5, diagnostic system 136 of airflow monitoring system 132 may include a storage device 140, a flow rate compare module 142 and a component adjustment module 144. Storage device 140 may be communicatively connected to flow rate compare module 142 and flow rate compare module 142 may be communicatively connected to component adjustment module 144. Diagnostic system 136 may be communicatively connected to airflow sensor 134 and may be configured to receive flow rate data sensed by airflow sensor 134. More specifically, and as discussed herein, flow rate compare module 142 of diagnostic system 136 may be configured to continuously receive or obtain flow rate data from airflow sensor 134 relating to the flow rate of the directed portion of supercharged air within conduit 127 (FIGS. 1-4).

Storage device 140 of diagnostic system 136, as shown in FIG. 5, may store predetermined flow rate data (P.F.R.D.) 146 (as shown in phantom) for gas turbine system 102 of combined cycle power plant 100 (FIGS. 1-4). In another embodiment, not shown, predetermined flow rate data 146 may be stored on an external device and may be obtained and temporarily stored on storage device 140. Predetermined flow rate data 146 may include data defining a desired air flow rate of the supercharged air in conduit 127 (FIGS. 1-4) which may increase the operational efficiency of gas turbine system 102 during the load ramp process, as discussed in more detail below. Predetermined flow rate data 146 may be based on at least one operational characteristic of gas turbine system 102 (FIGS. 1-4). More specifically, predetermined flow rate data 146 may be based on at least one operational characteristic of gas turbine system 102 including, but not limited to: a temperature of gas turbine system 102, an ambient temperature surrounding gas turbine system 102, an operational time for gas turbine system 102, a temperature of the exhaust gas generated by gas turbine system 102, an ambient temperature surround HRSG 104. As discussed herein, if flow rate data sensed by airflow sensor 134 differs from the desired air flow rate data of predetermined flow rate data 146, gas turbine system 102 of combined cycle power plant 100 may not be operating with increased efficiency and/or may be causing undesirable thermal stress to HRSG 104.

Flow rate compare module 142 of diagnostic system 136, as shown in FIG. 5, may be configured to compare flow rate data from airflow sensor 134 and predetermined flow rate data 146 from storage device 140. More specifically, flow rate compare module 142 may be configured to compare the data from airflow sensor 134 and storage device 140, and determine whether the flow rate data differs from the predetermined flow rate data 146 of storage device 140. Flow rate compare module 142 may also be configured to transmit an indicator to component adjustment module 144 of diagnostic system 136 in response to determining that the flow rate data differs from the predetermined flow rate data 146 of storage device 140.

Component adjustment module 144 of diagnostic system 136 may be configured to obtain an indicator from flow rate compare module 142 in response to determining that the flow rate data obtained from airflow sensor 134 differs from the predetermined flow rate data 146 of storage device 140, and may adjust an operational characteristic of at least one of automated valve 138, or supercharger 128. More specifically, component adjustment module 144 may receive an indicator from flow rate compare module 142, and may be configured to modify a position of automated valve 138 in conduit 127 and/or reduce the supercharged air output of supercharger 128. In an embodiment where a position of automated valve 138 may be modified, diagnostic system 136, and more specifically component adjustment module 144, may one of substantially open or substantially close automated valve 138 of conduit 127. By substantially opening or substantially closing automated valve 138 of conduit 127, an increased or decreased amount of the portion of supercharged air may be directed to exhaust duct 120, and/or HRSG 104. In an alternative embodiment, where the supercharged air output of supercharger 128 may be reduced, diagnostic system 136, and more specifically component adjustment module 144, may reduce the power output of auxiliary motor 130. By reducing the power output of auxiliary motor 130, supercharger 128 may produce less supercharged air for gas turbine system 102 of combined cycle power plant 100.

Diagnostic system 136, and its respective components (e.g., storage device 140, flow rate compare module 142, etc.), may be configured as any conventional data processing system (e.g., computer system) capable of receiving, temporarily storing and transmitting/forwarding data within the system and to external components coupled to the system (e.g., automated valve 138). More specifically, diagnostic system 138 may be configured as any conventional hardware device (computer system controller), and the components of diagnostic system 138 (e.g., storage device 140, flow rate compare module 142, etc.) may be configured as software components stored within said computer system forming diagnostic system 138. In an example embodiment, diagnostic system 138 may be configured as a General Electric™ Speedtronic circuit board implemented on a conventional computer system, and may including associated software for performing the operational functions discussed herein.

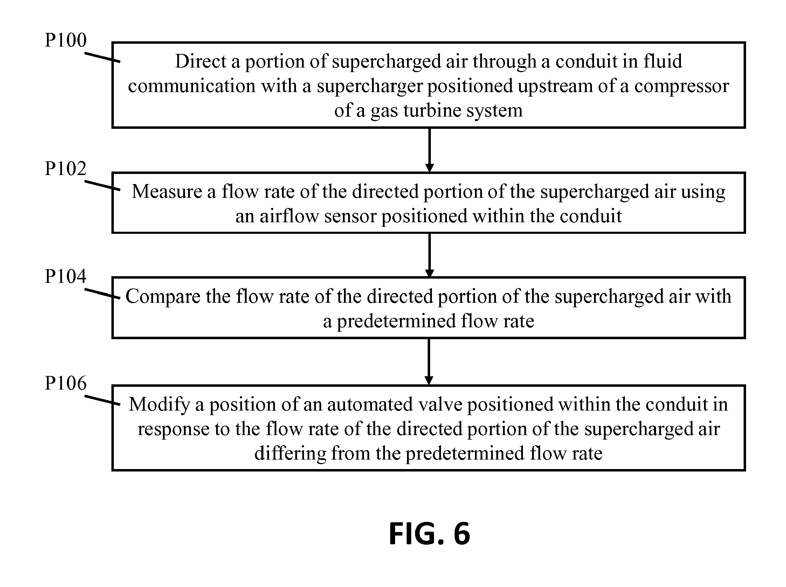

Turning to FIG. 6, with continuing reference to FIGS. 1-5, a flow diagram is shown illustrating processes of increasing the rate of a load ramp of gas turbine system 102, according to embodiments of the invention. The load ramp rate may include the increasing or decreasing of the power output of gas turbine system 102 during operation of combined cycle power plant 100.

As shown in FIG. 6, in process P100 a portion of supercharged air may be directed through conduit 127 in fluid communication with supercharger 128 during a load ramp process of gas turbine system 102 of combined cycle power plant 100. As discussed herein, conduit 127 may be configured to direct a portion of supercharged air for use in cooling HRSG 104 during the load ramp process of gas turbine system 102 of combined cycle power plant 100. Conduit 127 provided in process P100 may supply the portion of supercharged air to exhaust duct 120 of gas turbine system 102, and/or HRSG 104 in fluid communication with gas turbine system 102. After combined cycle power plant 100 implements load ramp system 126, including conduit 127 and supercharger 128, gas turbine system 102 may begin its load ramp process and conduit 127 may direct the portion of the supercharged air for use in cooling HRSG 104. More specifically, conduit 127 may direct supercharged air to exhaust duct 120, and/or HRSG 104 for substantially reducing the thermal stress placed on HRSG 104 during the load ramp process. That is, during the load ramp process of gas turbine system 102, supercharger 128 may supply a portion of supercharged air to conduit 127, and may supply at least a remaining portion of the supercharged air generated by supercharger 128 to compressor 108 of gas turbine system 102 via air inlet housing 116. The remaining portion of the supercharged air supplied to compressor 108 may increase the inlet air flow rate of the supercharged air, which may reduce the work required to compress the inlet air, and may result in greater power output by gas turbine system 102. Additionally, inlet air cooling system 118 of air inlet housing 116 may reduce the temperature of the supercharged air supplied to compressor 108, which may further increase inlet mass air flow rate of the supercharged air, resulting in greater power output by gas turbine system 102.

After the supercharged air is compressed, mixed with fuel, combusted and passed through gas turbine 112 to generate power in generator 115, the exhaust gas is moved through exhaust duct 120 to HRSG 104 of combined cycle power plant 100. In response to directing the portion of the supercharged air to exhaust duct 120, as shown in FIGS. 1, 2, 3 and 4, the supercharged air directed by conduit 127 may reduce a temperature of the exhaust gas generated during operation of gas turbine system 102. More specifically, where conduit 127 directs the portion of the supercharged air to exhaust duct 120, the supercharged air may mix with the high-temperature exhaust gas generated by gas turbine system 102, and may substantially reduce the temperature of the exhaust gas before the exhaust gas enters HRSG 104. By cooling the exhaust gas with the supercharged air HRSG 104 may maintain a substantially cooler temperature during the load ramp process of gas turbine system 102. More specifically, during the load ramp process of gas turbine system 102, HRSG 104 may undergo a more gradual change in temperature when exposed to the exhaust gas of gas turbine system 102, which may mitigate the thermal stress and/or thermal damage usually associated with start-up of gas turbine system 102. As discussed herein, the change in temperature of HRSG 104 of combined cycle power plant 100 may be dependent upon diagnostic system 136 modifying the position of automated valve 138 in conduit 127.

In response to supplying the portion of the supercharged air to HRSG 104, as shown in FIGS. 2 and 4, the supercharged air directed by conduit 127 may reduce a temperature of HRSG 104 during operation of gas turbine system 102. More specifically, where conduit 127 directs the portion of the supercharged air to HRSG 104, the supercharged air may substantially cool HRSG 104 and its internal components as the high-temperature exhaust gas enters HRSG 104 from exhaust duct 120. In this embodiment, during the load ramp process of gas turbine system 102, HRSG 104 may be substantially cooled during the extreme temperature change caused by the exhaust gas. The cooling of HRSG 120 using the supercharged air may also mitigate the thermal stress and/or thermal damage usually associated with the load ramp process of gas turbine system 102. As discussed herein, the cooling of HRSG 104 of combined cycle power plant 100 using the supercharged air may be dependent upon diagnostic system 136 modifying the position of automated valve 138 in conduit 127.

Following process P100, and the load ramp of gas turbine system 102 of combined cycle power plant 100, in process P102 a flow rate of the directed portion of the supercharged air is measured using airflow sensor 134 positioned within conduit 127. The flow rate data measured by airflow sensor 134 may be received or obtained by diagnostic system 136, as shown in FIG. 5. As discussed above, flow rate compare module 142 of diagnostic system 136 may receive or obtain the measured flow rate data from airflow sensor 134. In an example, airflow sensor 134 may determine that the supercharged air flowing through conduit 127 may include a flow rate of 100 m³/s during the load ramp process of gas turbine system 102.

Following process P102, in process P104, the flow rate data of the directed portion of the supercharged air measured by airflow sensor 134 may be compared with predetermined flow rate data 146 stored on storage device 140. Process P104 may be executed by flow rate compare module 142 (FIG. 6). Flow rate compare module 142 may receive or obtain the flow rate data measured by airflow sensor 134 and may simultaneously receive or obtain predetermined flow rate data 146 from storage device 140. Flow rate compare module 142 may then compare the flow rate data from airflow sensor 134 and predetermined flow rate data 146 from storage device 140 in order to determine if the flow rate data of airflow sensor 134 differs from predetermined flow rate data 146. More specifically, compare module 142 may compare the flow rate data from airflow sensor 134 and predetermined flow rate data 146 from storage device 140 and determine if the flow rate data from airflow sensor 134 is greater than, less than, or equal to the predetermined flow rate data 146 from storage device 140. Flow rate compare module 142 may then transmit an indicator to component adjustment module 144 indicating that the flow rate data from airflow sensor 134 is greater than, or less than the predetermined flow rate data 146 from storage device 140.

Continuing the example in process P102, flow rate compare module 142 may receive or obtain from airflow sensor 134 a measured flow rate of 100 m³/s. Simultaneously, flow rate compare module 142 may also receive or obtain from storage device 140 a predetermined flow rate of 100 m³/s. The predetermined flow rate of 100 m³/s may be based upon the operational characteristics of gas turbine system 102 and/or combined cycle power plant 100. More specifically, predetermined flow rate data 146 may require a 100 m³/s flow rate as a result of the exhaust gas generated by gas turbine system 102 having an above average temperature, and an ambient temperature surrounding gas turbine system 102 and HRSG 104 being below average. The predetermined flow rate may compensate for the exhaust gas having an above average temperature entering HRSG 104 having a below average operational temperature just prior to the load ramp process. That is, an increased desired flow rate may mitigate the thermal stresses that HRSG 104 may undergo due to the increased exhaust temperature and decreased ambient temperature. After obtaining or receiving each respective flow rate data (e.g., 100 m³/s, 100 m³/s), flow rate compare module 142 may then compare the flow rates and determine that the measured air flow of the supercharged air within conduit 127 is less than the predetermined flow rate (e.g., 100 m³/s < 100 m³/s). Finally, flow rate compare module 142 may transmit an indicator to component adjustment module 144 indicating that the measured air flow of the supercharged air within conduit 127 is less than the desired flow rat of predetermined flow rate data 146.

After comparing the flow rate data in process P104, in process P106, a position of automated valve 138 positioned within conduit 127 may be modified in response to the flow rate of the directed portion of the supercharged air differs from predetermined flow rate data 146. More specifically, once component adjustment module 144 receives the indicator from flow rate compare module 142 that the flow rate data from airflow sensor 134 is greater than, or less than the predetermined flow rate data 146 from storage device 140, component adjustment module 144 may modify the position of automated valve 138 to adjust the flow rate of the supercharged air within conduit 127. In response to determining the measured flow rate is less that the desired flow rate of predetermined flow rate data 146, the position of automated valve 138 may be modified to allow more air to flow through conduit 127 (e.g., open valve). In response to determining the measured flow rate is greater that the desired flow rate of predetermined flow rate data 146, the position of automated valve 138 may be modified to allow less air to flow through conduit 127 (e.g., close valve).

Continuing the example in process P104, component adjustment module 144 may receive an indicator from flow rate compare module indicating that the measured air flow of the supercharged air within conduit 127 is less than the desired flow rate of predetermined flow rate data 146 (e.g., 100 m³/s < 100 m³/s). As a result, component adjustment module 144 of diagnostic system 136 may communicate with automated valve 138 in order to modify the position of automated valve 138. More specifically, component adjustment module 144 may modify the position of automated valve 138 such that the automated valve 138 may be substantially opened to allow more supercharged air to flow through conduit 127.

By substantially opening automated valve 138, the measured flow rate within conduit 127 may equal the desired flow rate of predetermined flow rate data 146, and may direct the necessary supercharged air to exhaust duct 120 and/or HRSG 104 to substantially mitigate the thermal stress placed on HRSG 104 during the load ramp of gas turbine system 102. Additionally, once gas turbine system 102 and HRSG 104 generate the desired amount of power output for the load ramp process, and the thermal stress on HRSG 104 is substantially mitigated by providing the portion of supercharged air through conduit 127 to initially cool the exhaust gas, automated valve 138 may be substantially closed. By substantially closing automated valve 138, the majority of the supercharged air generated by supercharger 128 may be provided to compressor 108 of gas turbine system 102 to increase the power output of gas turbine system 102, and in conjunction, combined cycle power plant 100. A small portion of the supercharged air may still be directed to conduit 127 in order to continue to mitigate the thermal stress placed on HRSG 104 during operation of combined cycle power plant 100. However, the supercharged air directed to exhaust duct 120 and/or HRSG 104 via conduit 127 may be most beneficial during the load ramp process of gas turbine system 102 when HRSG 104 may undergo dramatic thermal stresses due to the high temperature exhaust gas entering HRSG 104.

Although the system and method described herein may be directed to a load ramp process of gas turbine system 102 of combined cycle power plant 100, it is understood the system may also be used during a start-up process of combined cycle power plant 100. More specifically, load ramp system 126 may be used in a substantially identical method as described herein for increasing a start-up rate for gas turbine system 102 and HRSG 104 of combined cycle power plant 100. Load ramp system 126 may also substantially preventing thermal stresses to HRSG 104 during the start-up process of combined cycle power plant 100, which may be caused by high temperature exhaust gas entering a "cold" HRSG 104.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A load ramp system for a heat recovery steam generator (HRSG) of a combined cycle power plant, the load ramp system comprising:
   a conduit in fluid communication with a supercharger positioned upstream of a compressor of a gas turbine system in the combined cycle power plant, the conduit configured to direct a portion of supercharged air for use in cooling the HRSG during load ramp of the gas turbine system in the combined cycle power plant.
2. The load ramp system of clause 1, further comprising:
   an airflow sensor for sensing a flow rate of the directed portion of the supercharged air within the conduit; and
   an automated valve for regulating the directed portion of the supercharged air within the conduit.
3. The load ramp system of clause 1 or 2, further including a diagnostic system operably connected to the airflow sensor, the supercharger and the automated valve.
4. The load ramp system of any preceding clause, wherein the supercharger is positioned in series upstream of an inlet air cooling system of the gas turbine system.
5. The load ramp system of any preceding clause, wherein the supercharger is positioned in series upstream of an air inlet housing.
6. The load ramp system of any preceding clause, wherein a remaining portion of the supercharged air is provided to the compressor of the gas turbine system for increasing an inlet mass air flow rate of the compressor.
7. The load ramp system of any preceding clause, wherein the conduit directs the portion of the supercharged air to an exhaust duct of the gas turbine system coupled to the HRSG.
8. The load ramp system of any preceding clause, wherein the conduit directs the portion of the supercharged air directly to the exhaust duct of the gas turbine system and the HRSG.
9. The load ramp system of any preceding clause, wherein the conduit directs the portion of the supercharged air directly to the HRSG.
10. A load ramp system for a heat recovery steam generator (HRSG) of a combined cycle power plant, the load ramp system comprising:
   a conduit in fluid communication with a supercharger positioned upstream of a compressor of a gas turbine system in the combined cycle power plant, the conduit configured to direct a portion of supercharged air for use in cooling the HRSG during load ramp of the gas turbine system in the combined cycle power plant; and
   an airflow monitoring system operably connected to the supercharger, the airflow monitoring system including:
      an airflow sensor positioned within the conduit, the airflow sensor for sensing a flow rate of the directed portion of the supercharged air within the conduit; and
      a diagnostic system operably connected to the airflow sensor, the supercharger and an automated valve positioned within the conduit, the diagnostic system configured to:
         modify a position of the automated valve in response to the flow rate of the directed portion of the supercharged air differing from a predetermined flow rate.
11. The load ramp system of any preceding clause, wherein the automated valve regulates the directed portion of the supercharged air within the conduit.
12. The load ramp system of any preceding clause, wherein the conduit directs the portion of the supercharged air to an exhaust duct of the gas turbine system coupled to the HRSG.
13. The load ramp system of any preceding clause, wherein the conduit directs the portion of the supercharged air directly to the exhaust duct of the gas turbine system and the HRSG.
14. The load ramp system of any preceding clause, wherein the conduit directs the portion of the supercharged air directly to the HRSG.
15. The load ramp system of any preceding clause, wherein the predetermined flow rate is based on at least one operational characteristic of the gas turbine system.
16. The load ramp system of any preceding clause, wherein the at least one operational characteristic of the gas turbine system includes at least one of:
   a temperature of the gas turbine system,
   an ambient temperature surrounding the gas turbine system,
   an operational time for the gas turbine system, or
   a temperature of an exhaust gas generated by the gas turbine system.
17. A method for increasing the rate of a load ramp process of a gas turbine system of a combined cycle power plant, the method comprising:
   during the load ramp process of the gas turbine system of the combined cycle power plant, directing a portion of supercharged air through a conduit in fluid communication with a supercharger positioned upstream of a compressor of the gas turbine system in the combined cycle power plant, the supercharged air for cooling a heat recovery steam generator (HRSG); and
   modifying a position of an automated valve positioned within the conduit in response to a flow rate of the directed portion of the supercharged air differing from a predetermined flow rate.
18. The method of any preceding clause, further comprising measuring the flow rate of the directed portion of the supercharged air using an airflow sensor positioned within the conduit.
19. The method of any preceding clause, wherein the conduit coupled to an exhaust duct of the gas turbine system coupled to the HRSG, reducing a temperature of an exhaust gas generated during operation of the gas turbine system.
20. The method of any preceding clause, wherein the conduit coupled directly to the HRSG, reducing a temperature of the HRSG during operation of the gas turbine system.

## Claims

1. A load ramp system (126) for a heat recovery steam generator (HRSG) (104) of a combined cycle power plant (100), the load ramp system comprising:
a conduit (127) in fluid communication with a supercharger (128) positioned upstream of a compressor (108) of a gas turbine system (102) in the combined cycle power plant, the conduit configured to direct a portion of supercharged air for use in cooling the HRSG during load ramp of the gas turbine system in the combined cycle power plant.

2. The load ramp system (126) of claim 1, further comprising:
an airflow sensor for sensing a flow rate of the directed portion of the supercharged air within the conduit (127); and
an automated valve for regulating the directed portion of the supercharged air within the conduit.

3. The load ramp system (126) of claim 2, further including a diagnostic system operably connected to the airflow sensor, the supercharger (128) and the automated valve.

4. The load ramp system (126) of any preceding claim, wherein the supercharger (126) is positioned in series upstream of an inlet air cooling system (118) of the gas turbine system (102).

5. The load ramp system (126) of any preceding claim, wherein the supercharger (128) is positioned in series upstream of an air inlet housing (116).

6. The load ramp system (126) of any preceding claim, wherein a remaining portion of the supercharged air is provided to the compressor (108) of the gas turbine system (102) for increasing an inlet mass air flow rate of the compressor (108).

7. The load ramp system (126) of any preceding claim, wherein the conduit (127) directs the portion of the supercharged air to an exhaust duct (120) of the gas turbine system (102) coupled to the HRSG (104).

8. The load ramp system (126) of claim 7, wherein the conduit (127) directs the portion of the supercharged air directly to the exhaust duct (120) of the gas turbine system (102) and the HRSG (104).

9. The load ramp system (126) of any of claims 1 to 7, wherein the conduit (127) directs the portion of the supercharged air directly to the HRSG (104).

10. The load ramp system of any preceding claim, further comprising:
an airflow monitoring system operably connected to the supercharger (128), the airflow monitoring system including:
an airflow sensor positioned within the conduit (127), the airflow sensor for sensing a flow rate of the directed portion of the supercharged air within the conduit; and
a diagnostic system operably connected to the airflow sensor, the supercharger and an automated valve positioned within the conduit, the diagnostic system configured to:
modify a position of the automated valve in response to the flow rate of the directed portion of the supercharged air differing from a predetermined flow rate.

11. The load ramp system (126) of claim 10, wherein the automated valve regulates the directed portion of the supercharged air within the conduit (127).

12. The load ramp system of either claim 10 or 11, wherein the conduit (127) directs the portion of the supercharged air to an exhaust duct (120) of the gas turbine system (102) coupled to the HRSG (104).

13. A method for increasing the rate of a load ramp process of a gas turbine system (102) of a combined cycle power plant (100), the method comprising:
during the load ramp process of the gas turbine system of the combined cycle power plant, directing (P100) a portion of supercharged air through a conduit (127) in fluid communication with a supercharger (128) positioned upstream of a compressor (108) of the gas turbine system in the combined cycle power plant, the supercharged air for cooling a heat recovery steam generator (HRSG) (104); and
modifying (P106) a position of an automated valve positioned within the conduit in response to a flow rate of the directed portion of the supercharged air differing from a predetermined flow rate.

14. The method of claim 13, further comprising measuring (P102) the flow rate of the directed portion of the supercharged air using an airflow sensor positioned within the conduit (127).

15. The method of either of claim 13 or 14, wherein the conduit coupled to an exhaust duct (120) of the gas turbine system (102) coupled to the HRSG (104), reducing a temperature of an exhaust gas generated during operation of the gas turbine system.
